# EUROPEAN PATENT APPLICATION

(11) **EP 1 199 345 A2**
(43) Date of publication of application: **24.04.2002**
(21) Application number: 01308603.8
(22) Date of filing: 09.10.2001
(51) Int. Cl.: C09J 5/06, B32B 5/26, B32B 31/00

(54) **A method of securing a polyurethane coated or laminated fabric with a fabric and a fabric made by such a method**

(30) Priority: 16.10.2000 US 688344
(71) Applicant: Prime Creation Development Limited, Wanchai, Hong Kong (CN)
(72) Inventor: Hui, Siu Wah, Tuen Mun, New Territories, Hong Kong (CN); Chan, Wing Kei Ricky, Shatin, New Territories, Hong Kong (CN)
(74) Representative: Watkin, Timothy Lawrence Harvey

(57) **Abstract**

There is disclosed a method of securing a first surface fabric and a second surface fabric together in which the first surface fabric is coated or laminated with a layer of polyurethane (PU), the method including the steps of (a) applying a layer of solid polyurethane (PU) adhesive onto the layer of PU of the first surface fabric; (b) heating the layer of PU adhesive and the first surface fabric to bond the layer of PU adhesive to the first surface fabric; (c) placing the layer of PU adhesive of the first surface fabric in contacting relationship with the second surface fabric; and (d) pressing and heating the first and second fabric members.

## Description

This invention relates to a method of securing a polyurethane (PU) coated or laminated fabric to another fabric, and a fabric made by such a method. In particular, such an invention relates to a method of securing a PU coated or laminated fabric to another fabric in which stitching or sewing is not required.

### Background of the Invention

In the field of manufacture of clothing, polyurethane (PU) is widely used for fabric finishing. Many clothing items require water-resistant fabrics while allowing water vapour to pass through. In order to achieve these functions, one or more layers of PU or micro-porous PU are coated on the backside of the fabric. Another method is to laminate a PU or micro-porous PU membrane on the backside of the fabric. Usually, the face fabric to which a PU layer or member is coated or laminated are polyamide (nylon) or polyester woven fabrics.

For the manufacture of general purpose clothing articles, these PU coated/laminated fabrics are cut, and such cut pieces are joined together by sewing threads and machines to produce the final clothing articles. However, there has been an increasing demand for outdoor clothing which can withstand more extreme weather conditions. Such outdoor clothing are specially designed garments for various different outdoor activities, e.g. skiing, snowboarding, yachting, sailing, hunting, hiking, etc.. A main requirement of such garments is that such are water-resistant. To achieve this, the fabric used for manufacturing such garments are mainly nylon or polyester fabrics with a backing cover of a layer of PU coating or a PU membrane. For high end products, water vapour transfer function (breathability) is also required, so that micro-porous PU is used for coating on fabric.

Basically, the performance of PU coatings/laminations is measured by the degree of water resistance (W/P) and water transfer rate (MVP). The unit of measurement of W/P is mm per square metre, i.e. the height of water that can be applied to one square metre of fabric before there is water leakage. The unit of measurement of MVP is gram per square metre per twenty-four hours, which is the weight of water vapour that can pass through each square metre of fabric within a period of twenty-four hours. Followings are some sample requirements of fabric:-
a. 100% nylon woven fabric with PU breathable coating:- W/P 5,000 mm/m², MVP 3,000g/m²/24hrs.
b. 100% polyester woven fabric with breathable PU lamination:- W/P 8,000 mm/m², MVP 10,000g/m²/24hrs.
c. 60% nylon, 40% polyester woven fabric with PU coating:- W/P 1,000 mm/m² (non-breathable).

Usually, the value of W/P of PU coating ranges from 600 to 30,000 mm/m², and the value of MVP ranges from 3,000 to 20,000g/m²/24hrs.

In terms of garment construction, outdoor clothing is quite different from the casual wear or city wear. Outdoor garments have zipper pockets all over the clothing, hoods, specially designed openings for ventilation, draw cords for adjustment of garment fitness, etc.. In order to cater for outdoor environments, multi-function linings and/or paddings are sewn together with the PU coated fabric.

However, during the manufacture of such outdoor garments, it is still necessary to sew, e.g. by sewing machines, various parts together. Water may enter the interior of the clothing, or even reach the user, through such stitch holes.

It is thus an object of the present invention to provide a method of fixing a PU layer to a surface fabric in which the aforesaid shortcoming is mitigated.

It is also an object of the present invention to provide a method whereby two fabrics are secured with each other, in which at least one fabric is coated or laminated with a layer of PU.

It is a further object of the present invention to provide a fabric made in accordance with the above method.

Such and other objects of the present invention will be made known and clear in the following contents.

### Summary of the Invention

According to a first aspect of the present invention, there is provided a method of securing a first fabric member and a second fabric member together wherein at least said first fabric member is coated or laminated with a layer of polyurethane (PU), said method including the steps of (a) applying at least one layer of adhesive on said layer of PU of said first fabric member; (b) heating said at least one layer of adhesive material and said first fabric member to bond said at least one layer of adhesive material to said first fabric member; (c) placing said at least one layer of adhesive material of said first fabric member in contacting relationship with said second fabric member; and (d) heating and applying pressure on said first and second fabric members.

According to a second aspect of the present invention, there is provided a fabric including a first fabric member bonded with a second fabric member, wherein said first fabric member is coated or laminated on one major surface with at least a first layer of polyurethane (PU), and wherein said first layer of PU is fixedly secured to said second fabric member *via* an adhesive material.

### Brief Description of the Drawings

An embodiment of the present invention will now be described, by way of example only, and with reference to the accompanying schematic drawings, in which:-
Fig. 1 shows the application of a layer of adhesive material onto a PU-coated or PU-laminated surface fabric, in a method according to the present invention;
Fig. 2 shows the application of high pressure steam onto said layer of adhesive material shown in Fig.1;
Fig. 3 shows the application of high pressure steam onto said surface fabric shown in Fig. 1;
Figs. 4 and 5 show an apparatus used in a method according to the present invention;
Fig. 6 shows a cross sectional view of a fabric made by the method according to the present invention.

### Detailed Description of the Preferred Embodiment

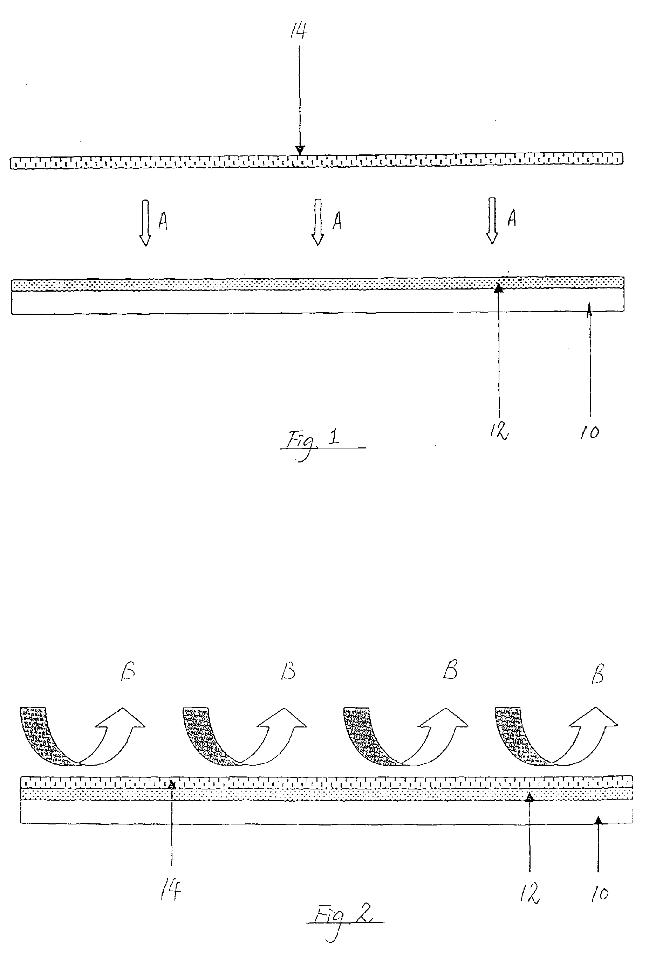

Figs. 1 to 5 show the steps whereby a method according to the present invention is carried out.

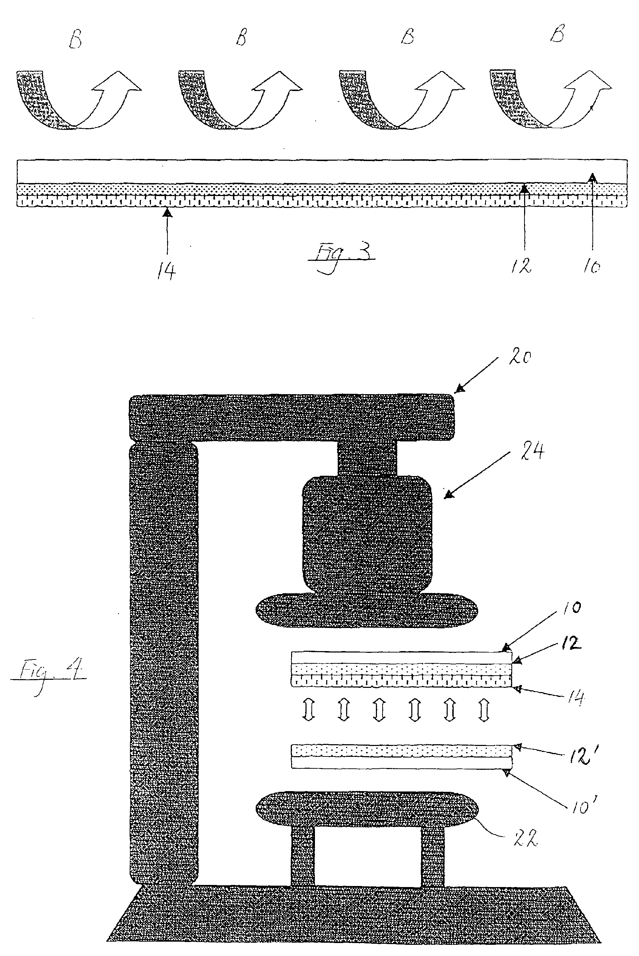

As shown in Fig. 1, an inner major surface of a nylon, polyester, polyurethane (PU) or polyvinyl chloride (PVC) face fabric 10 is coated with a layer of PU or laminated with a PU membrane 12. A layer of solid glue substance 14 is applied onto the layer of PU 12, in the direction indicated by arrows A in Fig. 1. An appropriate glue substance may be a solid polyurethane adhesive film traded by Bemis Associates, of USA, under Product Code 3218. As shown in Fig. 2, high pressure steam, as denoted by arrows B, is then applied onto the layer of solid glue substance 14, in order to melt the glue substance 14 to cause it to bond with the layer of PU 12. The high pressure steam is of a temperature of 100°C, and is applied onto the glue substance 14 at a pressure between of 0.2kgf/cm² to 3.0kgf/cm², and preferably at a pressure of 0.5kgf/cm². The high pressure steam is applied onto the glue substance 14 for 7 to 30 seconds, and preferably for 10 seconds.

After the above step, the surface fabric 10, together with the layer of glue substance 14, is then turn upside down, as shown in Fig. 3, whereupon high pressure steam, again as denoted by arrows B, is applied onto the layer of surface fabric 10. The high pressure steam is of a temperature of 100°C, and is applied at a pressure of between 0.2kgf/cm² to 3.0kgf/cm², and preferably at a pressure of 0.5kgf/cm². The high pressure steam is applied onto the surface fabric 10 for 3 to 20 seconds, and preferably for 5 seconds.

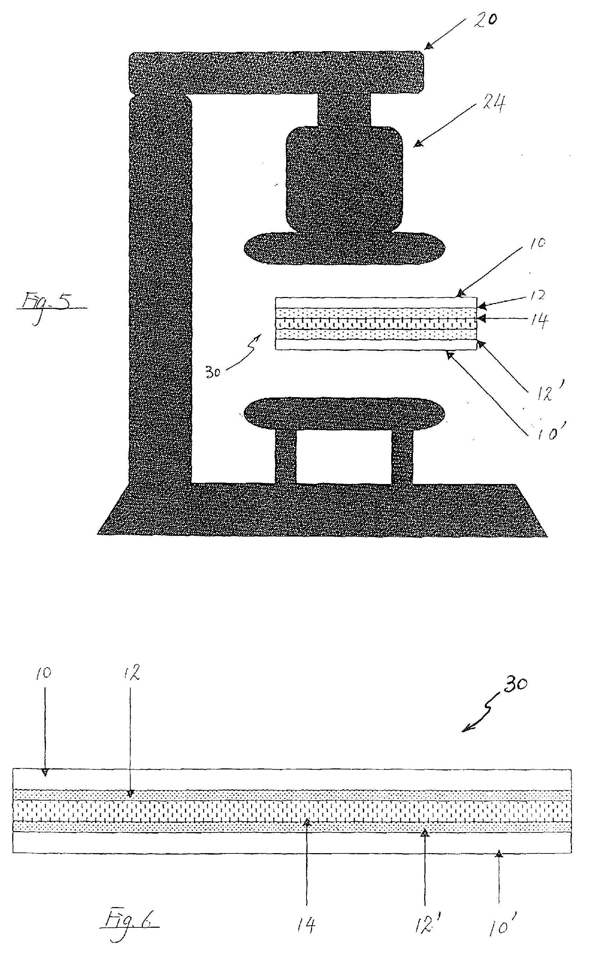

As shown in Fig. 4, a high pressure pressing machine 20 for carrying out the present method is shown. A surface fabric 10 having gone through the previous steps is to be bonded to another surface fabric 10' which is coated with a layer of polyurethane (PU) or laminated with a PU membrane 12'. The machine 20 includes a platform 22 for supporting the face fabrics 10, 10' for treatment. The machine 20 also includes a presser and heater 24 which is movable vertically up and down. The presser and heater 24 is operable to move downwardly towards the platform 22 to press the face fabric 10 against the face fabric 10'. In particular, the presser and heater 24 applies onto the fabrics 10, 10' a pressure of between 0.5kgf/cm² to 3kgf/cm², preferably a pressure of 1.5kgf/cm², at a temperature of between 250°C to 500°C, preferably a temperature of 320°C, for 8 to 20 seconds, and preferably for 12 seconds, so as to bond the fabrics 10, 10' together, as shown in Fig. 5. The bonded fabric, collectively indicated as 30, is then allowed to cool down to room temperature, i.e. around 20°C to 30°C, and remain at room temperature for 5 to 10 minutes.

One side of the bonded fabric 30 is then heated and pressed again by the high pressure pressing machine 20 at a pressure of between 0.5kgf/cm² to 3kgf/cm², preferably a pressure of 1.5kgf/cm², at a temperature of between 250°C to 500°C, preferably a temperature of 320°C, for 2 to 20 seconds, and preferably for 3 seconds. The same procedure is applied on another side of the bonded fabric 30.

A resultant two-sided fabric 30 formed by the above method is shown in Fig. 6. The single layer of glue substance 14 firmly secures the two layers of PU coating or lamination 12, 12', and thus the two face fabrics 10, 10', together. This seamless fabric 30 may then be used in various different clothing or apparel products.

While an embodiment of the present invention has thus far been illustrated by an example in which each of the two surface fabrics 10 and 10' is coated or laminated with a layer of PU 12, 12', it is found in practice that a layer of coated or laminated PU may be absent in either one of the fabrics 10, 10'.

With this invention, seamless garments may be produced, which provide new flexibilities in terms of both product design and manufacture. As there are no stitching holes on the garment surface, water resistance is significantly improved. Such fabrics are thus most suitable for manufacture of outdoor clothing.

In a sewing process of functional clothing apparel, some accessories, e.g. zippers, lining fabrics, paddings, VELCRO ® attachments, logo patchings, etc., have to be sewn onto the garments. Such accessories are mainly made by polyester, nylon, PU or PVC. The present invention thus provides a new method appropriate for attaching these accessories to a PU-coated or PU-laminated fabric. Such a method is practical for replacing traditional thread sewing operations used in the production of garments.

While an embodiment of the present invention has been herein described by way of an example, it should be understood that variations and/or modifications may be made thereto without departing from the spirit of the present invention.

## Claims

1. A method of securing a first fabric member and a second fabric member together wherein at least said first fabric member is coated or laminated with a layer of polyurethane (PU), said method including the steps of:-
(a) applying at least one layer of adhesive on said layer of PU of said first fabric member;
(b) heating said at least one layer of adhesive material and said first fabric member to bond said at least one layer of adhesive material to said first fabric member;
(c) placing said at least one layer of adhesive material of said first fabric member in contacting relationship with said second fabric member; and
(d) heating and applying pressure on said first and second fabric members.

2. A method according to Claim 1 wherein said adhesive material comprises a solid adhesive.

3. A method according to Claim 1 wherein said step (b) is carried out by applying steam onto said at least one layer of adhesive material.

4. A method according to Claim 3 wherein said steam is applied onto said at least one layer of adhesive material at a pressure of between 0.2kgf/cm² to 3.0kgf/cm².

5. A method according to Claim 4 wherein said steam is applied onto said at least one layer of adhesive material at a pressure of substantially 0.5kgf/cm².

6. A method according to Claim 3 wherein said steam is applied onto said at least one layer of adhesive material for 7 to 30 seconds.

7. A method according to Claim 6 wherein said steam is applied onto said at least one layer of adhesive material for substantially 10 seconds.

8. A method according to Claim 1 including a step of applying steam onto said first fabric member.

9. A method according to Claim 8 wherein said steam is applied onto said first fabric member at a pressure of between 0.2kgf/cm² to 3.0kgf/cm².

10. A method according to Claim 9 wherein said steam is applied onto said first fabric member at a pressure of substantially 0.5kgf/cm².

11. A method according to Claim 8 wherein said steam is applied onto said first fabric member for 3 to 20 seconds.

12. A method according to Claim 11 wherein said steam is applied onto said first fabric member for substantially 5 seconds.

13. A method according to Claim 1 wherein said second fabric member is coated or laminated with a layer of PU.

14. A method according to Claim 1 wherein, in said step (d), said first and second fabric members are heated at between 250°C to 400°C.

15. A method according to Claim 14 wherein said first and second fabric members are heated at substantially 320°C.

16. A method according to Claim 1 wherein, in said step (d), a pressure of between 0.5kgf/cm² to 3kgf/cm² is applied on said first and second fabric members.

17. A method according to Claim 16 wherein a pressure of substantially 1.5kgf/cm² is applied on said first and second fabric members.

18. A method according to Claim 1 wherein, in said step (d), said first and second fabric members are pressed and heated for between 8 to 20 seconds.

19. A method according to Claim 18 wherein said first and second fabric members are pressed and heated for substantially 12 seconds.

20. A method according to Claim 1 wherein, including a step (e) of, after said step (d), cooling said first and second fabric members to between 20°C to 30°C.

21. A method according to Claim 20 further including a step (f) of applying a pressure of between 0.5kgf/cm² to 3kgf/cm² onto said first fabric member for between 2 to 10 seconds at a temperature of between 250°C to 500°C.

22. A method according to Claim 21 wherein said step (f) is carried out by applying a pressure of substantially 1.5kgf/cm² onto said first fabric member for substantially 3 seconds at a temperature of substantially 320°C.

23. A method according to Claim 20 further including a step (g) of applying a pressure of between 0.5kgf/cm² to 3kgf/cm² onto said second fabric member for between 2 to 10 seconds at a temperature of between 250°C to 500°C.

24. A method according to Claim 23 wherein said step (g) is carried out by applying a pressure of substantially 1.5kgf/cm² onto said second fabric member for substantially 3 seconds at a temperature of substantially 320°C.

25. A fabric including a first fabric member bonded with a second fabric member, wherein said first fabric member is coated or laminated on one major surface with at least a first layer of polyurethane (PU), and wherein said first layer of PU is fixedly secured to said second fabric member *via* an adhesive material.

26. A fabric according to Claim 25 wherein said adhesive material is a PU adhesive.

27. A fabric according to Claim 25 wherein said first layer of PU is fixedly secured to said second fabric member *via* a second layer of PU.

28. A fabric according to Claim 27 wherein said second layer of PU is coated or laminated on a major surface of said second fabric member.

29. A fabric according to Claim 25 wherein said first fabric member is made at least principally of nylon, polyester, polyvinyl chloride or polyurethane.

30. A fabric according to Claim 25 wherein said second fabric member is made at least principally of nylon, polyester, polyvinyl chloride or polyurethane.
